# EUROPEAN PATENT SPECIFICATION

(11) **EP 1 298 621 B1**
(45) Date of publication and mention of the grant of the patent: **11.01.2006**
(21) Application number: 02256499.1
(22) Date of filing: 19.09.2002
(51) Int. Cl.: G08G 1/0968, G01C 21/20

(54) **Navigation system**
Navigationssystem
Système de navigation

(30) Priority: 27.09.2001 JP 2001297154
(43) Date of publication of application: 02.04.2003
(73) Proprietor: Pioneer Corporation, Tokyo-to (JP)
(72) Inventor: Sato, Tsuyoshi, c/o Pioneer Corporation, Tsurugashima-shi, Saitama-ken (JP); Watanabe, Tomo, c/o Pioneer Corporation, Tsurugashima-shi, Saitama-ken (JP); Oda, Tamami, c/o Pioneer Corporation, Tsurugashima-shi, Saitama-ken (JP)
(74) Representative: Townsend, Victoria Jayne

(56) References cited:
- DE-A- 19 646 603
- US-A- 5 724 243
- PATENT ABSTRACTS OF JAPAN vol. 1997, no. 12, 25 December 1997 (1997-12-25) -& JP 09 222334 A (NISSAN MOTOR CO LTD), 26 August 1997 (1997-08-26)

## Description

### BACKGROUND OF THE INVENTION

### Field of the Invention:

The present invention relates to a technical field of a navigation apparatus, and more particularly to a car navigation apparatus that can quickly navigate a driver of a car going to an unknown place.

### Description of the Related Art:

In recent years, with the explosive spread of portable telephone units, there are a greatly increasing number of persons possessing a portable telephone unit. In a car navigation apparatus, an infrastructure for acquiring various kinds of information from the outside has been arranged. For example, a communication navigation apparatus is well-known in which the map information is distributed to the car through the communication to make a navigation.

By the way, when a person with a portable telephone unit makes a phone call to one's home in the nearest station to pick up the person, it is practiced to inform the place on the phone and pick up the person in the station.

In this case, the driver of the car to pick up the person can set up a destination in the nearest station with a car navigation apparatus, and drive the car quickly, on the basis of route navigation information provided by searching for a route up to the destination.

However, there was an inconvenience with the conventional car navigation apparatus that when the driver of the car to pick up the person went to an unknown place or station, it took a lot of time to grasp that location.

DE 19646603 A describes a GPS mobile telephone especially used for emergency calls, where the GPS receiver determines location coordinates of the mobile phone when an emergency occurs and transmits them via modem to a help station where they are conveyed to GPS navigation system to determine the location and calculate the route to the site of the emergency.

US 5724243 A describes a dispatching system using a vehicle equipped with a mobile unit which receives from the dispatch center the destination information and the mobile unit calculates the route to follow by the vehicle.

### SUMMARY OF THE INVENTION

It is therefore an object of the present invention to provide a navigation system, a route searching method for the navigation system etc. which even when the driver to pick up the person does not know the place, can navigate the driver quickly and properly to the place.

The above object of the present invention can be achieved by a navigation system provided with: a first communication terminal unit; a second mobile communication terminal unit which communicates with the first communication terminal unit; and a car navigation apparatus. The first communication terminal unit includes a location information transmitting device which transmits the self-location information to the second communication terminal unit. The second mobile communication terminal unit includes a location information receiving device which receives the location information transmitted from the first communication terminal unit and a location information transfer device which transfers the received location information to the car navigation apparatus. The car navigation apparatus includes a route searching device which sets up a destination on the basis of the location information transferred from the second mobile communication terminal unit and searches for the route up to the destination.

Herein, the car navigation apparatus may be a communication navigation apparatus composed of a server apparatus stationarily installed outside the car and a terminal unit, mounted on the car, for communicating via the mobile radio communications network with the server apparatus, besides the navigation apparatus mounted on the car.

According to the present invention, when the user of the second mobile communication terminal unit drives the car to pick up the user of the first communication terminal unit, for example, the user of the second mobile communication terminal unit can be navigated quickly and properly to the place owing to a route navigation of the car navigation apparatus, even if the user of the second mobile communication terminal unit to drive the car does not know the place for the user of the first communication terminal unit.

In one aspect of the navigation system of the present invention, the first communication terminal unit is a mobile communication terminal unit having a function of communicating with the car navigation apparatus, and the location information transmitting device of the first communication terminal unit transmits the location information after movement to the car navigation apparatus, if the self-location is moved after transmitting the self-location information to the second mobile communication terminal unit. Moreover, the car navigation apparatus further includes a location information receiving device which receives the location information after movement transmitted from the first communication terminal unit.

Herein, the mobile communication terminal units may include a portable telephone unit, PHS (Personal Handy-Phone System), PDA (Mobile Terminal), and a satellite communication portable telephone unit.

According to this aspect, the person driving the car can grasp that the user of the first communication terminal unit has moved from the place since making a communication with the second mobile communication terminal unit.

In another aspect of the navigation system of the present invention, the route searching device of the car navigation apparatus resets the destination on the basis of the location information after movement, and searches for the route up to the destination again, if receiving the location information after movement.

According to this aspect, even when the user of the first communication terminal unit has moved, the person driving the car can be navigated correctly to the place after movement.

In further aspect of the navigation system of the present invention, the first communication terminal unit has a function of communicating with the car navigation apparatus, and further includes a location information request device which requests the location information of the car navigation apparatus to the car navigation apparatus, and the car navigation apparatus further includes a location information transmitting device which transmits the self-location information to the first communication terminal unit, if there is a request for the location information from the first communication terminal unit.

According to this aspect, the user of the first communication terminal unit can appropriately grasp where the car is running now and how long it takes to arrive at the destination.

In a further aspect of the navigation system of the present invention, the car navigation apparatus has a function of communicating with the first communication terminal unit and further includes a location information transmitting device which transmits the self-location information to the first communication terminal unit.

According to this aspect, the user of the first communication terminal unit can grasp the current location of the car and the arrival time.

In a further aspect of the navigation system of the present invention, the car navigation apparatus has a function of communicating with the first communication terminal unit and further includes a location information transmitting device which periodically transmits the self-location information to the first communication terminal unit.

According to this aspect, the user of the first communication terminal unit can grasp successively where the car is running now and how long it takes to arrive at the destination.

In a further aspect of the navigation system of the present invention, the first communication terminal unit further includes a location information receiving device which receives the location information transmitted from the car navigation apparatus, and a location information presenting device which presents the received location information to the user of the first communication terminal unit.

According to this aspect, the user of the first communication terminal unit can make sure by voice or display where the car is running now and how long it takes to arrive at the destination.

In a further aspect of the navigation system of the present invention, the location information transfer device of the second mobile communication terminal unit has a short distance radio communication function to transfer the received location information to the car navigation apparatus using the short distance radio communication function.

Herein, the mobile communication terminal units may include a portable telephone unit, PHS (Personal Handy-Phone System), PDA (Mobile Terminal), and a satellite communication portable telephone unit.

According to this aspect, if the user of the second mobile communication terminal unit rides in the car, after the second communication terminal unit receives a communication from the first communication terminal unit, the location information of the first communication terminal unit is automatically transferred to the navigation apparatus by the short distance radio function, whereby the navigation system can have a greater service ability.

The above object of the present invention can be achieved by a first communication terminal unit in a navigation system provided with: the first communication terminal unit, a second mobile communication terminal unit which communicates the first communication terminal unit, and receives the location information of the first communication terminal unit transmitted from the first communication terminal unit to transfer it to a car navigation apparatus, and the car navigation apparatus, mounted on the car, which sets up a destination on the basis of the location information of the first communication terminal unit transferred from the second mobile communication terminal unit and searches for the route up to the destination, including a location information transmitting device which transmits the self-location information to the second mobile communication terminal unit.

The above object of the present invention can be achieved by a second mobile communication terminal unit in a navigation system provided with the second mobile communication terminal unit, a first communication terminal unit which transmits the self-location information to the second mobile communication terminal unit, and a car navigation apparatus, mounted on the car, which sets up a destination on the basis of the location information of the first communication terminal unit transferred from the second communication terminal unit and searches for the route up to the destination, including a location information receiving device which receives the location information transmitted from the first communication terminal unit; and a location information transfer device which transfers the received location information to the car navigation apparatus.

The above object of the present invention can be achieved by a route searching method for use in a navigation system having a first communication terminal unit, a second mobile communication terminal unit which communicates with the first communication terminal unit, and a car navigation apparatus, provided with: a step of transmitting the self-location information to the second mobile communication terminal unit by the first communication terminal unit; a step of receiving the location information transmitted from the first communication terminal unit to transfer it to the car navigation apparatus by the second mobile communication terminal unit; and a step of setting up a destination on the basis of the location information transferred from the second mobile communication terminal unit and searching for the route up to the destination by the car navigation apparatus.

In one aspect of the route searching method of the present invention the route searching method further includes: a step of transmitting the location information after movement to the car navigation apparatus by the first communication terminal unit, if the location of the first communication terminal unit is moved after the location information is transmitted from the first communication terminal unit to the second mobile communication terminal unit; a step of receiving the location information after movement transmitted from the first communication terminal unit by the car navigation apparatus; and a step of resetting the destination on the basis of the received location information after movement, and searching for the route up to said destination by the car navigation apparatus.

The above object of the present invention can be achieved by an information recorded medium wherein a program for a second mobile communication terminal unit makes a computer function as: a location information receiving device which receives a location information transmitted from a first communication terminal unit; and a location information transfer device which transfers the received location information to a car navigation apparatus.

### BRIEF DESCRIPTION OF THE DRAWINGS

FIG. 1 is a block diagram showing a schematic configuration of a navigation system according to an embodiment of the present invention;
FIG. 2 is a block diagram showing a schematic configuration of a portable telephone unit A;
FIG. 3 is a view illustrating various sorts of operation keys provided on a front face of the portable telephone unit A;
FIG. 4 is a block diagram showing a schematic configuration of a portable telephone unit B;
FIG. 5 is a block diagram showing a schematic configuration of a car navigation apparatus S;
FIG. 6 is a view showing a flow of data (information) between components of a navigation system 100;
FIG. 7 is a sequence diagram showing a portion of concern in the invention for the flow of data (information) between components of the navigation system 100;
FIG. 8 is a flowchart showing a process of a system controller 21 for the portable telephone unit A in the entire operation of the navigation system 100;
FIG. 9 is a flowchart showing a process of a system controller 41 for the portable telephone unit B in the entire operation of the navigation system 100; and
FIG. 10 is a flowchart showing a process of a system controller 70 for the car navigation apparatus S in the entire operation of the navigation system 100.

### DETAILED DESCRIPTION OF THE PREFERRED EMBODIMENTS

The preferred embodiments of the present invention will be described below with reference to the accompanying drawings.

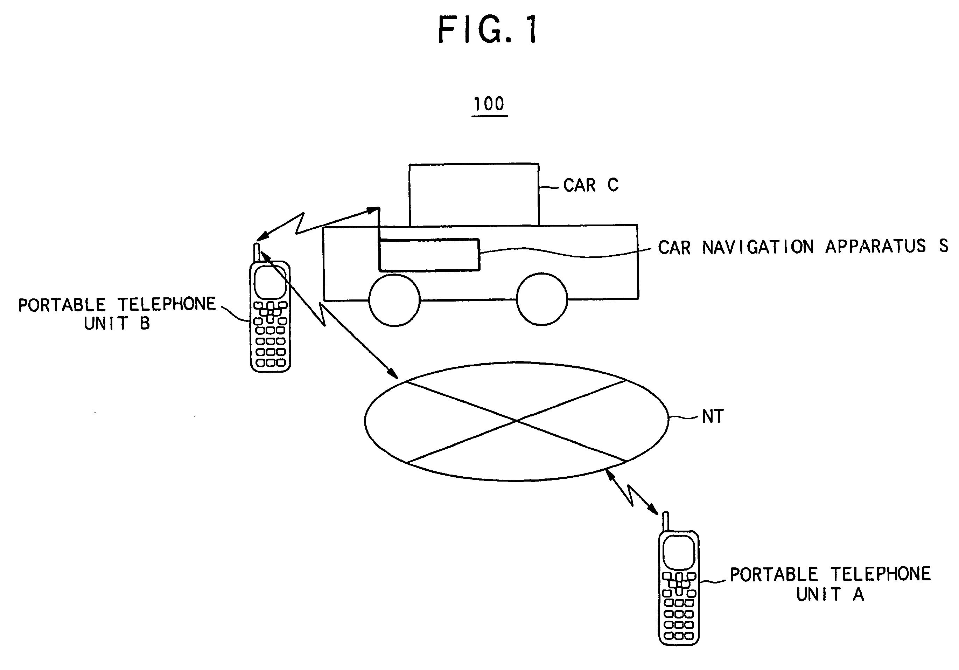

Referring to FIGS. 1 to 4, a schematic configuration and function of a navigation system according to this embodiment of the invention will be described below.

### [I-I. Configuration of Navigation System]

FIG. 1 is a block diagram showing a schematic configuration of the navigation system according to this embodiment. As shown in FIG.1, a navigation system 100 is provided with a portable telephone unit (mobile unit) A as a first communication terminal unit of the invention, a portable telephone unit (mobile unit) B as a second communication terminal unit of the invention, and a car navigation apparatus mounted on the car C, in which a communication line is established through a mobile radio communications network (public telephone network line, private line, etc.) NT as communication means to interconnect the components of.the portable telephone unit A, the portable telephone unit B and the car navigation apparatus S. The portable telephone unit A, the portable telephone unit B and the car navigation apparatus S are connected via a radio base station, for example, to the mobile radio communications network NT. [I-II. Configuration and Function of Portable Telephone Unit A]

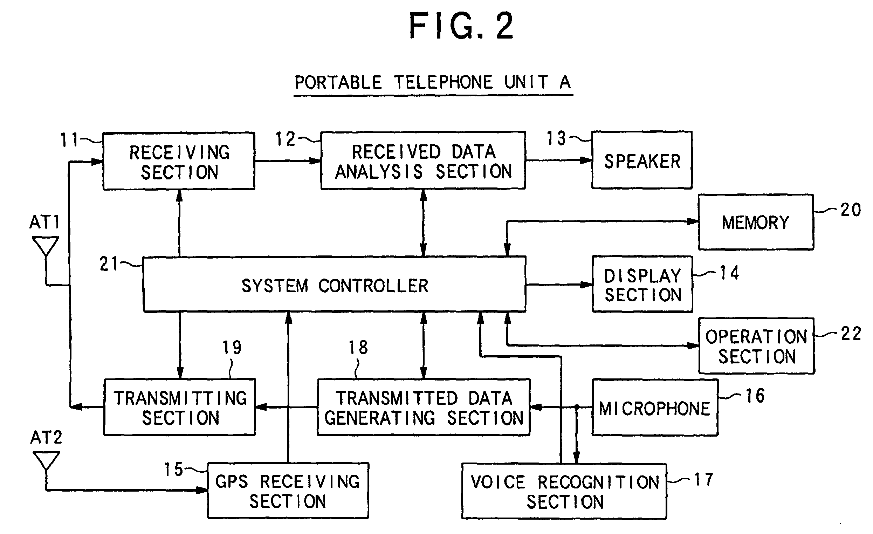

FIG. 2 is a block diagram showing a schematic configuration of the portable telephone unit A. As shown in FIG. 2, the portable telephone unit A includes a receiving section 11, a received data analysis section 12, a speaker 13, a display section 14, a GPS (Global Positioning System) receiving section 15, a microphone 16, a voice recognition section 17, a transmitted data generating section 18, a transmitting section 19, a memory 20, a system controller 21, and an operation section 22.

The receiving section 11 has a function of receiving various sorts of information (data) including the voice data input via an antenna AT1 through the mobile radio communications network NT from the portable telephone unit B. Also, the receiving section 11 has another function as a location information receiving device of a first communication terminal unit in this invention to receive the location information of the car navigation apparatus S transmitted from the car navigation apparatus S (the location information of car navigation apparatus S is the location information of the car C and hereinafter referred to as "car location information"), and the required time for the car C having the car navigation apparatus S mounted to arrive at the location of the portable telephone unit A (hereinafter referred to as "car arrival required time").

The received data analysis section 12 has a function of analyzing various sorts of information (data) received by the receiving section 11 to output the voice data to the speaker 13 and output the car location information and the car arrival required time to the memory 20 and the system controller 21.

The speaker 13 has a basic function of amplifying the voice data from the received data analysis section 12. Also, the speaker 13 has another function as a location information presenting device of the first communication terminal unit in the invention, with the system controller 21 to output by voice the received car location information and car arrival required time to the user of the portable telephone unit A, upon an instruction of the system controller 21.

The display section 14 is composed of a liquid crystal display, and has a basic function of displaying various choices of operation contents, upon an instruction from the system controller 21. Also, the display section 14 has another function as a location information presenting device of the first communication terminal unit in the invention, with the system controller 21 to display the received car location information and/or car arrival required time to the user of the portable telephone unit A.

The GPS receiving section 15 has a function of receiving electric wave broadcast from a GPS satellite via an antenna AT2 in the receiving equipment to detect the current location information (latitude, longitude) of the portable telephone unit A contained therein and output it to the system controller 21.

The microphone 16 has a basic function of inputting the voice of the user. The voice recognition section 17 has a basic function of recognizing the voice input by the microphone 16. The transmitted data generating section 18 has a basic function of generating the voice data to be transmitted on the basis of the voice recognized by the voice recognition section 17.

The transmitting section 19 has a basic function of transmitting the voice data generated by the transmitted data generating section 18 via the antenna AT1 through the mobile radio communications network NT to the portable telephone unit B, upon an instruction from the system controller 21.

Also, the transmitting section 19 has a function as a location information transmitting device of the first communication terminal unit in the invention, with the system controller 21 to transmit the self-location information (portable telephone unit A) (hereinafter referred to as "terminal location information") detected by the GPS receiving section 15, and the terminal information including the telephone number and the identification number of the portable telephone unit A via the antenna AT1 through the mobile radio communications network NT to the portable telephone unit B, when communicating with the portable telephone unit B, upon an instruction of the system controller 21.

Also, the transmitting section 19 has a function of transmitting the terminal location information after movement and the terminal information via the antenna AT1 through the mobile radio communications network NT to the car navigation apparatus S, upon an instruction of the system controller 21, when the self-location is moved after the transmitting section 19 transmits the terminal location information to the portable telephone unit B.

Moreover, the transmitting section 19 has a function as a location information request device of the first communication terminal unit in the invention, with the system controller 21, to transmit the self-location information to the portable telephone unit B, and transmit the information for requesting the car location information (hereinafter referred to as "car location request information") via the antenna AT1 through the mobile radio communications network NT to the car navigation apparatus S, upon an instruction of the system controller 21.

The memory 20 is composed of a nonvolatile memory such as a card type storage medium that is detachable, for example, a memory card and a PC card, to store the terminal information of portable telephone unit A, the terminal information (including the name of the user) of a plurality of telephone units including the portable telephone unit B, the received car location information, the car arrival required time, and the communications history. Also, the memory 20 stores the device information including the telephone number or identification number of the car navigation apparatus S.

The system controller 21 includes a CPU having the computer features, an oscillation circuit, a ROM for storing the programs and data for controlling various operations, a RAM as a working area, and various sorts of input/output ports (e.g., operation input port, GPS receiving port, display control port), and makes the operation control in the portable telephone unit A and the communication control with the portable telephone unit B and the car navigation apparatus S.

Also, the system controller 21 has another function of outputting the terminal location information and the terminal information stored in the memory 20 to the transmitting section 19 for transmission to the portable telephone unit B, if there is a transmission instruction input of terminal location information from the operation section 22 during the communication with the portable telephone unit B.

Also, the system controller 21 has another function of establishing a communication line with the car navigation apparatus S and outputting the terminal location information after movement and the terminal information stored in the memory 20 to the transmitting section 19 for transmission to the car navigation apparatus S, if the location of the portable telephone unit A is moved after the terminal location information is transmitted to the portable telephone unit B. In this case, the system controller 21 discriminates whether or not the self-location is moved beyond a predetermined range, on the basis of the location information detected by the GPS receiving section 15, and if so, automatically outputs the terminal location information and the terminal information to the transmitting section 19.

If the location of the portable telephone unit A is moved, the system controller 21 may output the terminal location information and the terminal information to the transmitting section 19, after waiting for a transmission instruction input of terminal location information from the operation section 22.

Also, the system controller 21 has a function of establishing a communication line with the car navigation apparatus S and outputting the car location request information to the transmitting section 19 for transmission to the car navigation apparatus S, if there is a transmission instruction input of car location request information from the operation section 22 after the terminal location information is transmitted to the portable telephone unit B.

Moreover, the system controller 21 has a function of presenting the car location information and/or car arrival required time via the speaker 13 or display section 14 to the user, if the car location information or the car arrival required time is received, as described above.

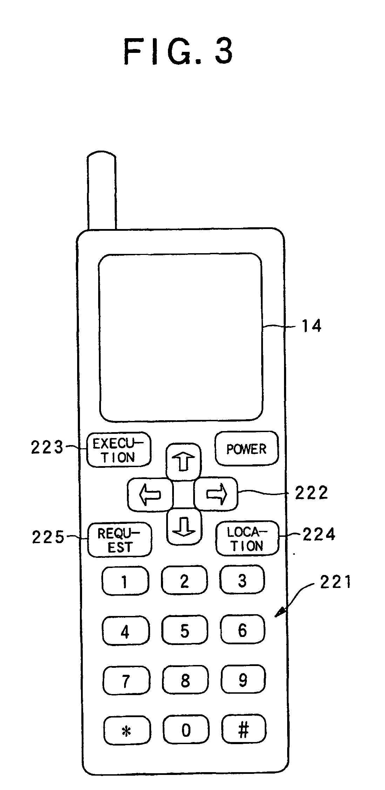

The operation section 22 has various sorts of operation keys for use when the user of the portable telephone unit A makes communication (service). FIG. 3 illustrates one example of various sorts of keys provided on the front face of the portable telephone unit A. As shown in FIG. 3, on the front face of the portable telephone unit A, there are arranged the numeric keys 221 for inputting the telephone number of called party, arrow keys 222 for retrieving desired information (e.g., telephone number of called party) stored in the memory 20, an execution key 223 for establishing a communication line on the basis of an input telephone number, or executing various kinds of instructions, a terminal location information transmitting key 224 for inputting a transmission instruction of terminal location information to the system controller 21, and a car location information request key 225 for inputting a transmission instruction of car location request information to the system controller 21. If the user presses any of these various sorts of keys, a corresponding detecting signal is sent to the system controller 21, which then performs various processings in response to it.

### [I-III. Configuration and Function of Portable Telephone Unit B]

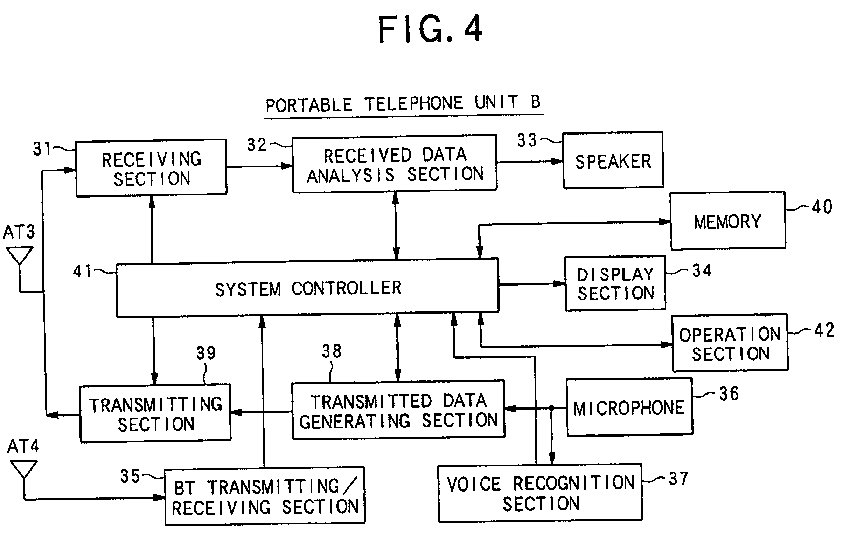

FIG. 4 is a block diagram showing a schematic configuration of the portable telephone unit B. As shown in FIG. 4, the portable telephone unit B includes a receiving section 31, a received data analysis section 32, a speaker 33, a display section 34, a BT (Bluetooth) transmitting/receiving section 35, a microphone 36, a voice recognition section 37, a transmitted data generating section 38, a transmitting section 39, a memory 40, a system controller 41, and an operation section 42.

The receiving section 31 has a function of receiving various sorts of information (data) including the voice data input via an antenna AT3 through the mobile radio communications network NT from the portable telephone unit A. Also, the receiving section 31 has another function as a location information receiving device of a second communication terminal unit in this invention to receive the terminal location information and terminal information transmitted from the portable telephone unit A.

The received data analysis section 32 has a function of outputting the voice data received by the receiving section 31 to the speaker 13 and output the car location information and the car arrival required time to the memory 20 and the system controller 21.

The speaker 33 and the display section 34 have the same functions as the basic functions of the speaker 13 and the display section 14 for the portable telephone unit A, respectively. And the display, section 14 has a function of displaying the received terminal location information, upon an instruction of the system controller 41.

The BT (Bluetooth) transmitting/receiving section 35 has a function as a location information transfer device of the second communication terminal unit in this invention to transfer the received terminal location information and terminal information to the car navigation apparatus S. The BT transmitting/receiving section 35 is mainly composed of an LSI (Large-Scale Integration), for example, and has a short distance radio communication function in accordance with the Bluetooth or the short distance radio communication technical standards tomake the data communications by short distance radio via the antenna AT4 with the other apparatus (car navigation apparatus S in this embodiment) having the BT transmitting/receiving section.

Specifically, the Bluetooth communication system applies a slave master system that is divided into a master unit for deciding the frequency hopping pattern and a slave unit for communication partner under the control of the master unit in accordance with the processing contents.

For example, in a case where the BT transmitting/receiving section 35 of the portable telephone unit B is the master unit, if any slave unit (BT transmitting/receiving section for the car navigation apparatus S) existing within a radius of about 10m is recognized, an approval process for exchanging and confirming their dedicated ID numbers, and producing a link key (password key) between master and slave units by generating the random number is made. By this approval process, connection between master and slave units is established to enable the data communication. Once the approval process is made between master and slave units, the master and slave units are automatically connected to enable the data communication on the basis of the link key, without making the approval process at the time of subsequent connection. Thus, the BT transmitting/receiving section 35 transfers the received terminal location information and terminal information to the car navigation apparatus S in accordance with an instruction of the system controller 41.

The microphone 36, the voice recognition section 37, the transmitted data generating section 38 and the transmitting section 39 have the same functions as the basic functions of the microphone 16, the voice recognition section 17, the transmitted data generating section 18 and the transmitting section 19 for the portable telephone unit A, respectively.

The memory 40 is composed of a nonvolatile memory such as a card type storage medium that is detachable, for example, a memory card and a PC card, to store the terminal information of portable telephone unit B, the terminal information (e.g., the name of the user) of a plurality of telephone units including the portable telephone unit A, the received terminal location information and terminal information of portable telephone unit A, and the communications history. Also, the memory 40 stores the device information including the telephone number or identification number of the car navigation apparatus S.

The system controller 41 includes a CPU having the computer features, an oscillation circuit, a ROM for storing the programs and data for controlling various operations, such as the programs of the invention, a RAM as a working area, and various sorts of input/output ports (e.g., operation input port, BT input/output port, display control port), and makes the operation control in the portable telephone unit B and the communication control with the portable telephone unit A and the car navigation apparatus S.

Also, the system controller 41 has another function of outputting the terminal location information and the terminal information to the BT transmitting/receiving section 35 so that the received terminal location information and terminal information may be automatically transferred from the BT transmitting/receiving section 35 to the car navigation apparatus S, if the data communication by short distance radio is enabled between the BT transmitting/receiving section 35 and the car navigation apparatus S.

The operation section 42 has various sorts of operation keys, including numeric keys, arrow keys, and an execution key, for use when the user of the portable telephone unit B makes communication (service) in the same manner as with the portable telephone unit A. If the user presses any of these various sorts of keys, a corresponding detecting signal is sent to the system controller 41, which then performs various processings in response to it.

### [I-IV. Configuration and Function of Car Navigation Apparatus S]

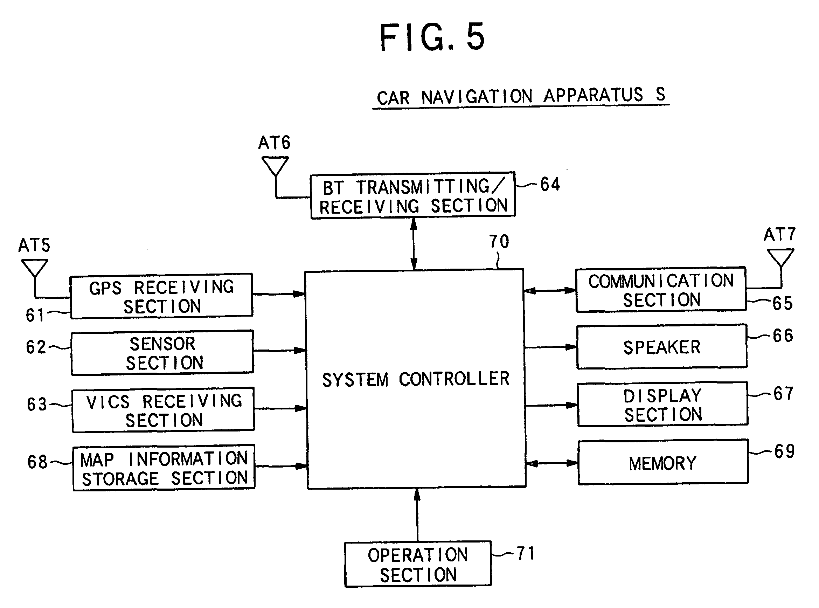

FIG. 5 is a block diagram showing a schematic configuration of the car navigation apparatus S. As shown in FIG. 5, the car navigation apparatus S includes a GPS receiving section 61, a sensor section 62, a VICS (Vehicle Information Communication System) receiving section 63, a BT transmitting/receiving section 64, a communication section 65, a speaker 66, a display section 67, a map information storage section 68, a memory 69, a system controller 70, and an operation section 71.

The GPS receiving section 61 has a function of receiving electric wave broadcast from a GPS satellite via an antenna AT5 in the receiving equipment to detect the current location information (latitude, longitude) of the car navigation apparatus S contained therein and output it to the system controller 70.

The sensor section 62 has a speed sensor, an acceleration sensor, and a gyro sensor. The speed sensor has a function of sensing the running speed of the car C, and converting its sensed speed into speed data in the form of pulse or voltage for output to the system controller 70. The acceleration sensor has a function of sensing a moving state of the car C in the up or down direction by comparing the acceleration produced by the travel of the car C with the gravitational acceleration, and converting the acceleration data indicating the sensed moving state into pulse or voltage form for output to the system controller 70. The gyro sensor has a function of sensing an azimuth angle of the car C, or the direction where the car C is running and converting the sensed azimuth angle into the azimuth data in the form of pulse or voltage for output to the system controller 70.

The VICS receiving section 63 has a function of receiving the traffic information including the holdup information from an information communication installation placed along the road and outputting it to the system controller 70.

The BT transmitting/receiving section 64 has the same function as the BT transmitting/receiving section 35 in the portable telephone unit B, as described above, to make the data communication by short distance radio via an antenna AT6 with the BT transmitting/receiving section 35. Namely, the BT transmitting/receiving section 64 has a function of receiving the terminal location information and the terminal information transferred from the BT transmitting/receiving section 35 and outputting it to the system controller 70, if connection with the BT transmitting/receiving section 35 in the portable telephone unit B is established through the approval process as described above.

The communication section 65 has a function as a location information receiving device of the car navigation apparatus in the invention to receive the terminal location information after movement and the terminal information transmitted from the portable telephone unit A.

Also, the communication section 65 has a function as a location information transmitting device of the car navigation apparatus in the invention, with the system controller 70, to transmit the car location information and the car arrival required time via an antenna AT7 through the mobile radio communications network NT to the portable telephone unit A, upon an instruction of the system controller 70.

The speaker 66 has a function of outputting the route searching and route navigation information up to the destination and the information of car arrival required time in the form of voice, upon an instruction of the system controller 70.

The display section 67 is composed of a liquid crystal display, for example, to display the map data, the route searching and route navigation information up to the destination, and the information of car arrival required time, upon an instruction of the system controller 70.

The map information storage section 68 is composed of a CD (Compact Disc)-ROM drive, or a DVD (Digital Versatile Disc)-ROM drive. A read-only storage medium (CD-ROM, DVD-ROM) detachably mounted on the map information storage section 68 has recorded the map information including the road information required for the navigation operation. The map information storage section 68 has a function of reading the map information for output to the system controller 70, upon an instruction of the system controller 70.

The memory 69 is composed of a nonvolatile memory such as a card type storage medium that is detachable, for example, a memory card and a PC card, to store the terminal location information and terminal information of portable telephone unit A transferred from the portable telephone unit B, the car location information and the car arrival required time to be transmitted to the portable telephone unit A, and the communications history.

The system controller 70 includes a CPU having the computer features, an oscillation circuit, a ROM for storing the programs and data for controlling various operations, such as the programs of the invention, a RAM as a working area, and various sorts of input/output ports (e.g., operation input port, GPS receiving port, BT input/output port, and display control port), and makes the operation control in the car navigation apparatus S and the communication control with the portable telephone unit A and the portable telephone unit B.

Also, the system controller 70 has another function of calculating the correct location of the car C (car location information to be transmitted to the portable telephone unit A), on the basis of the location information from the GPS receiving section 61 and the speed data, the acceleration data and the azimuth angle data from the sensor section 62.

Also, the system controller 70 has another function of acquiring the required map information from the map information storage section 68 and the required traffic information from the VICS receiving section 63, searching for the route up to the destination set by the operation section 71, on the basis of the map information, the traffic information and the car location information, generating the route navigation information and calculating the car arrival required time.

Also, the system controller 70 has another function as a route searching device of the car navigation apparatus in the invention to set up a destination on the basis of the terminal location information transferred from the portable telephone unit B and searching for the route up to the destination. Namely, the location of the portable telephone unit A is automatically set up as the destination, and the route is searched for. This automatic setting of the destination is made when a "welcome and farewell mode on/off switch" in the operation section 71 is on. And the system controller 70 produces the route navigation information, on the basis of the route to the location of the portable telephone unit A that is searched for, and calculates the car arrival required time.

Further, the system controller 70 has a function of setting up a destination on the basis of the location information after movement, and searching for the route up to the destination, if receiving the terminal location information after movement from the portable telephone unit A. Namely, when the location of the portable telephone unit A is moved, the location of the portable telephone unit A after movement is automatically set as the destination and the route is searched for.

Also, the system controller 70 has another function of outputting the calculated car location information and car arrival required time (car location information alone is possible) to the communication section 65 for transmission to the portable telephone unit A, as described above. The output of the car location information and car arrival required time is made when the BT transmitting/receiving section 35 receives the terminal location information and the terminal information transferred from the portable telephone unit B, and when there is a request for the car location information from the portable telephone unit A, that is, when the car location request information transmitted from the portable telephone unit A is received. When a transmission instruction of the car location information is input from the operation section 71, the car location information and the car arrival required time may be output. Also, after the transferred terminal location information and terminal information is received, the car location information and the car arrival required time may be output periodically, for example, at every three minutes.

The operation section 71 has various sorts of operation keys, including a key for setting up the destination in the route search, a key for instructing the transmission of car location information, and a key for displaying various kinds of information on the display section 67, and a welcome and farewell mode on/off switch. If the user presses any of these various sorts of keys, a corresponding detecting signal is.sent to the system controller 70, which then performs various processings in response to it. An on/off state of the welcome and farewell mode on/off switch is detected by the system controller 70.

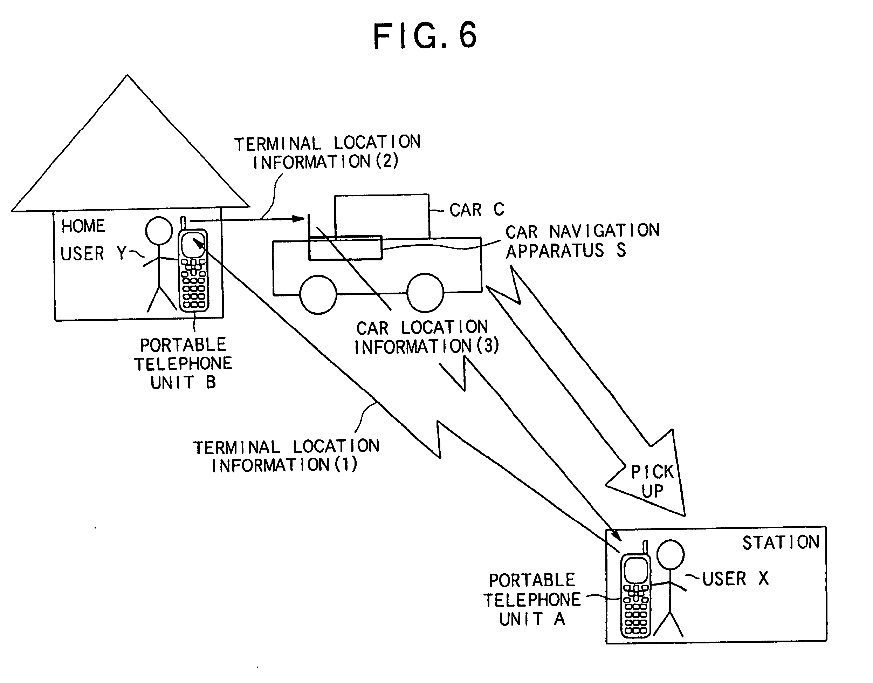

Referring to FIGS. 6 to 10, the operation of the navigation system 100 will be described below. FIG. 6 shows a flow of data (information) between components of the navigation system 100. In the following explanation, it is supposed that the user X of the portable telephone unit A at a certain location (e.g., station) calls the user Y of the portable telephone unit B at home to pick up the user X by the car C, as shown in FIG. 6.

### [II-I. Overall Operation of Navigation System]

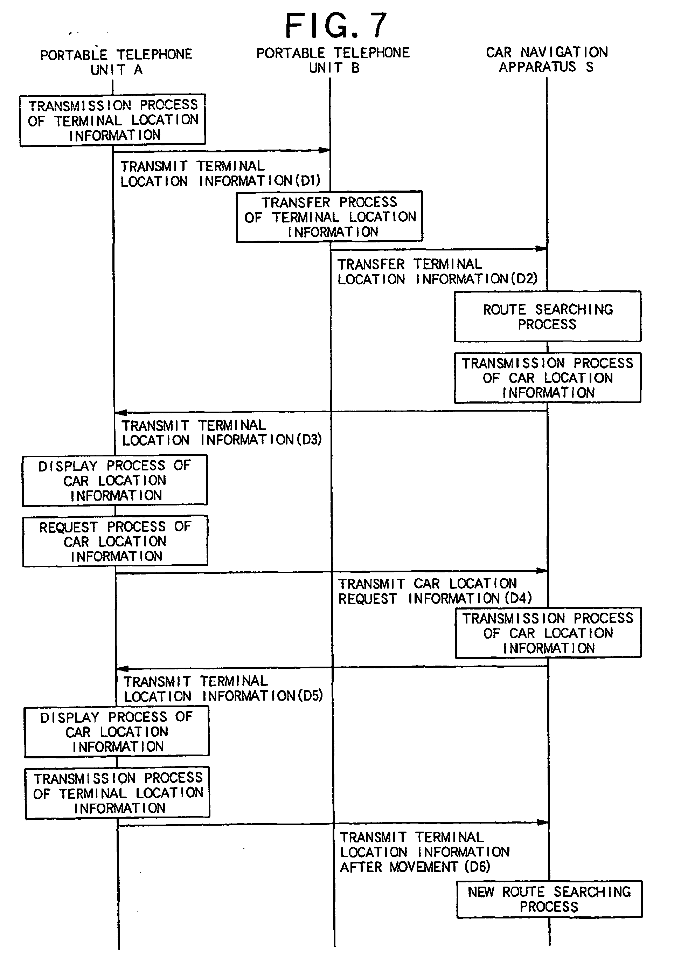

FIG. 7 is a sequence diagram showing a portion of concern in the invention for the flow of data (information) between components of the navigation system 100.

First of all, in the portable telephone unit A, if the user X makes a phone call to the portable telephone unit B, a line connection process is performed, so that a communication line between the portable telephone unit A and the portable telephone unit B is established. And if the user X inputs an instruction for transmitting the terminal location information, the terminal location information and the terminal information of the portable telephone unit A are transmitted through the mobile radio communication network NT to the portable telephone unit B through a transmission process for the terminal location information and the terminal information in the portable telephone unit A, as shown in FIG. 7 (D1).

If the terminal location information and the terminal information are received in the portable telephone unit B, those bits of information are stored in the memory 40. Thereafter, the user Y leaves home and gets into the car C. If the portable telephone unit B and the car navigation apparatus S enters the range of short distance radio communications, the terminal location information and the terminal information of the portable telephone unit A are transmitted by short distance radio to the car navigation apparatus S through a transfer process for the terminal location information and the terminal information in the portable telephone unit B, as shown in FIG. 7 (D2).

Then, if the terminal location information and the terminal information of the portable telephone unit A are acquired in the car navigation apparatus S, a destination is set up on the basis of the terminal location information, a route up to the destination is searched for and presented to the user Y through a route searching process in the car navigation apparatus S, and the car arrival required time is calculated, as shown in FIG. 7. Thereby, the user Y can drive to pick up the user X rapidly due to a route navigation of the car navigation apparatus S, even though the current location of the user X is an unknown place to which the user Y has never been.

Then, a line connection process on the basis of the acquired terminal information of the portable telephone unit A is performed in the car navigation apparatus S, so that a communication line between the car navigation apparatus S and the portable telephone unit A is established. And the car location information and the car arrival required time are transmitted via the mobile radio communications network NT to the portable telephone unit A through a transmission process of the car location information and the car arrival required time in the car navigation apparatus S (D3), as shown in FIG. 7.

Then, if the car location information and the car arrival required time are received in the portable telephone unit A, the car location information and the car arrival required time are displayed on the display section 14 through a display process of the car location information and the car arrival required time in the portable telephone unit A, as shown in FIG. 7. Thereby, the user X can grasp where the car C is running now and how long it takes to arrive at the destination.

If the user X input a request for the car location information in the portable telephone unit A, the car location request information is transmitted through the mobile radio communications network NT to the car navigation apparatus S through a request process of the car location information (D4), as shown in FIG. 7. If the car navigation apparatus S receives this car location request information, the car location information and the car arrival required time are transmitted through the mobile radio communications network NT to the portable telephone unit A (D5) in the same manner as above. And in the portable telephone unit A, the transmitted car location information and the car arrival required time are updated, and the updated car location information and the car arrival required time are displayed on the display section 14.

Then, if the location of the portable telephone unit A is moved beyond a predetermined range because the user X is moved, a line connection process is made on the basis of the device information of the car navigation apparatus S, so that a communication line between the portable telephone unit A and the car navigation apparatus S is established. And the terminal location information (after movement) and the terminal information are transmitted through the mobile radio communications network NT to the car navigation apparatus S through a transmission process (after movement) of the terminal location information and the terminal information in the portable telephone unit A (D6), as shown in FIG. 7.

Then, if the terminal location information (after movement) and the terminal information are received in the car navigation apparatus S, a destination is set up on the basis of the terminal location information (after movement), the route up to the destination is searched for and presented to the user Y through a new route searching process (S40) in the car navigation apparatus S, and the car arrival required time is calculated, as shown in FIG. 7. Thereby, even if the location of the portable telephone unit A is moved, the new route up to the location after movement is automatically searched for, whereby the user Y riding in the car C can be navigated to the correct location.

### [II-II. Operation of Portable Telephone Unit A]

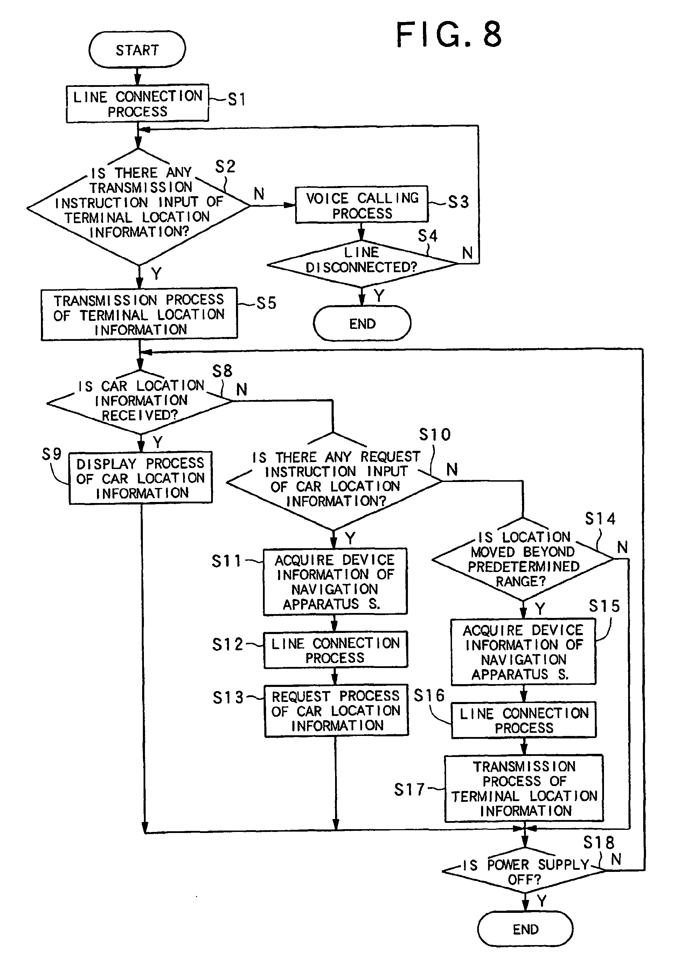

FIG. 8 is a flowchart showing a process of the system controller 21 for the portable telephone unit A in the entire operation of the navigation system 100 as described in connection with FIG. 7.

In FIG. 8, the system controller 21 performs a line connection process in accordance with an input (input of the telephone number for making a call with the portable telephone unit B) from the operation section 22 by the user X of the portable telephone unit A (step S1) to establish a communication line with the portable telephone unit B.

Then, the system controller 21 discriminates whether or not there is a transmission instruction input of the terminal location information (step S2). If not, the system controller 21 performs a voice calling process under the control of transmitting and receiving the voice data till the line is disconnected (steps S3, S4).

On the other hand, if there is any transmission instruction input of the terminal location information (step S2: Y), the systemcontroller 21 makes a transmission process for the terminal location information and the terminal information detected by the GPS receiving section 15, for example, when the user X presses a terminal location information transmission key 224 of the operation section 22 (step S5). Thereby, the terminal location information and the terminal information are transmitted from the portable telephone unit A through the mobile radio communication network NT to the portable telephone unit B (D1 in FIG. 7). The terminal location information and the terminal information may be transmitted by the user X entering a predetermined code (number) with the numeric keys 221 of the operation section 22, instead of pressing the terminal location information transmission key 224 of the operation section 22.

Then, the system controller 21 discriminates whether or not the car location information and the car arrival required time are received (step S8). If it is discriminated that the car location information and the car arrival required time are received (step S8: Y), the system controller 21 stores the car location information and the car arrival required time in the memory 20, and performs a display process of them on the display section 14 (step S9). Also, the system controller 21 outputs by voice the received car location information and the car arrival required time from the speaker 13.

On the other hand, if it is discriminated that the car location information and the car arrival required time are not received (step S8: N), the system controller 21 discriminates whether or not there is a request instruction input of the car location information (step S10).

If it is discriminated that there is a request instruction input of the car location information (step S10: Y), the system controller 21 acquires the device information of the car navigation apparatus S from the memory 20 (step S11), for example, when the user X presses the car location information request key 225 of the operation section 22, and performs the line connection process on the basis of the device information (step S12), thereby establishing the communication line with the car navigation apparatus S.

Then, the system controller 21 performs a request process of the car location information (step S13). Thereby, the car location request information is transmitted from the portable telephone unit A through the mobile radio communications network NT to the car navigation apparatus S (D4 in FIG. 7).

On the other hand, if it is discriminated that there is no request instruction input of the car location information (step S10: N), the system controller 21 discriminates whether or not the self-location is moved beyond a predetermined range (e.g., a range with a radius of 50m) on the basis of the terminal location information detected by the GPS receiving section 15 (step S14).

If it is discriminated that the self-location is moved beyond the predetermined range (step S14: Y), the system controller 21 acquires the device information of the car navigation apparatus S from the memory 20 (step S15), and performs the line connection process on the basis of the device information (step S16), thereby establishing the communication line with the car navigation apparatus S.

Then, the system controller 21 performs the transmission process of the terminal location information after movement of the portable telephone unit A and the terminal information (step S17). Thereby, the terminal location information after movement and the terminal information are transmitted from the portable telephone unit A through the mobile radio communications network NT to the car navigation apparatus S (D6 in FIG. 7).

At step S14, the system controller 21 may discriminate whether or not the terminal location information transmission key 224 of the operation section 22 is pressed, instead of discriminating whether or not the self-location is moved beyond the predetermined range, and perform the steps S15 to S17, if it is pressed by the user X.

The processings following step S8 are repeated till the power source is turned off (step S18: N).

### [II-III. Operation of Portable Telephone Unit B]

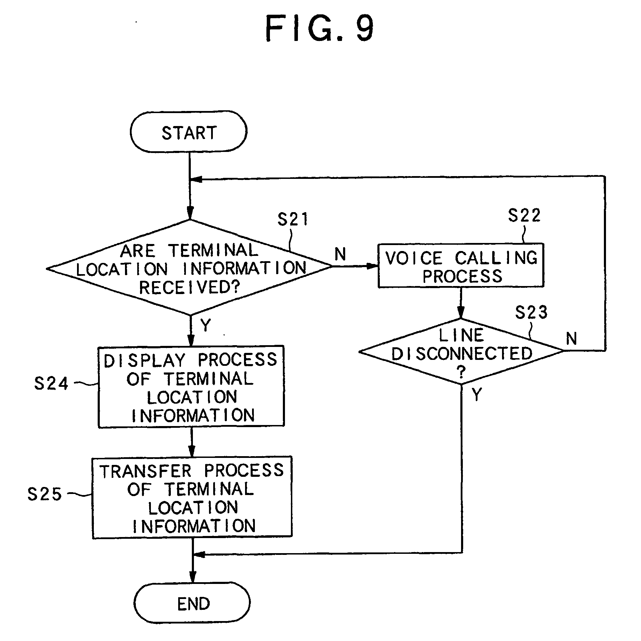

FIG. 9 is a flowchart showing a process of a system controller 41 for the portable telephone unit B in the entire operation of the navigation system 100 as described in connection with FIG. 7.

If a communication line between the portable telephone unit A and the portable telephone unit B is established by a phone call from the portable telephone unit A, the system controller 41 discriminates whether or not the terminal location information and the terminal information of the portable telephone unit A are received (step S21).

If it is discriminated that the terminal location information and the terminal information are not received (step S21: N), the system controller 41 performs a voice calling process till the line is disconnected (step S22).

On the other hand, if it is discriminated that the terminal location information and the terminal information are received (step S21: Y), the system controller 41 stores the terminal location information and the terminal information in the memory 40 and performs a display process of them on the display section 34 (step S24).

Then, the portable telephone unit B approaches the car navigation apparatus S to establish a connection between the BT transmitting/receiving section 35 of the portable telephone unit B and the BT transmitting/receiving section 64 of the car navigation apparatus S, the system controller 41 performs a transfer process of the terminal location information and the terminal information (step S25). For example, if the portable telephone unit B enters a range of short distance radio communication with the car navigation apparatus S, the BT transmitting/receiving section 35 detects it, and in response to it, the system controller 41 reads the terminal location information and the terminal information from the memory 40, and outputs them to the BT transmitting/receiving section 35 to transfer them. Thereby, the terminal location information and the terminal information of the portable telephone unit A are transferred by short distance radio from the portable telephone unit B to the car navigation apparatus S (D2 in FIG. 7). Though not shown in FIG. 8, this transfer process can be performed even after disconnection of the line between the portable telephone unit A and the portable telephone unit B.

### [II-IV. Operation of Car Navigation Apparatus S]

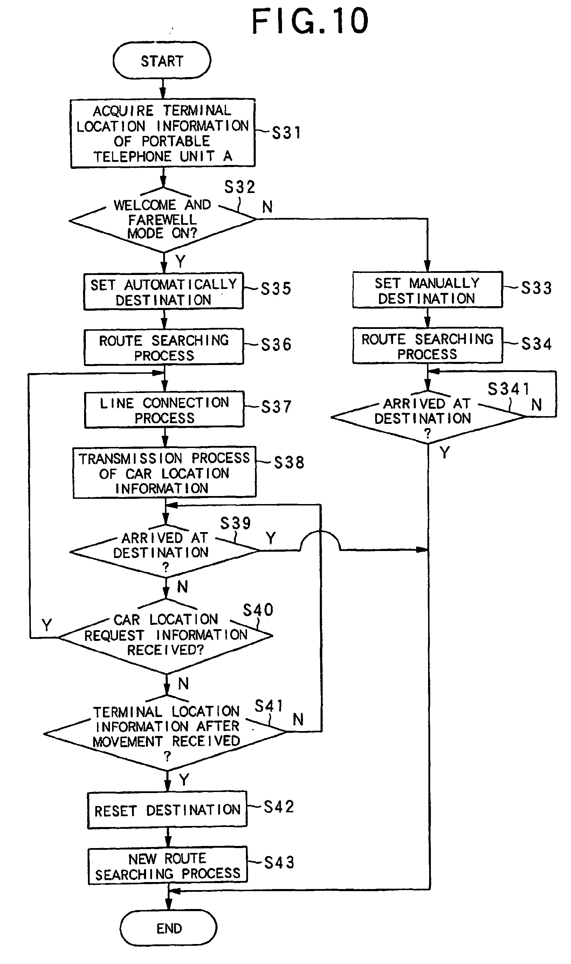

FIG. 10 is a flowchart showing a process of a system controller 70 for the car navigation apparatus S in the entire operation of the navigation system 100 as described in connection with FIG. 7.

If the terminal location information and the terminal information of the portable telephone unit A transferred from the portable telephone unit B is acquired (step S31), the system controller 70 stores the terminal location information and the terminal information in the memory 69, and discriminates whether or not the welcome and farewell mode is on, namely, the welcome and farewell mode on/off switch is in on state (step S32). If it is discriminated that the welcome and farewell mode is not on (step S32: N), the system controller 70 transfers to the normal route searching mode to set a destination with an input of the destination from the operation section 71 (step S33), and perform a route searching process up to the destination (step S34). And the system controller 70 discriminates whether the car C arrives at the set destination (step S341). If it is discriminated that the car C arrives at the destination (step S341: Y), the process is ended.

On the other hand, if it is discriminated that the welcome and farewell mode is on (step S32: Y), the system controller 70 sets up the destination on the basis of the transferred terminal location information of the portable telephone unit A (step S35).

Then, the system controller 70 performs the route searching process up to the set destination, on the basis of the map information, the traffic information and the car location information, to produce the route navigation information and calculate the car arrival required time (step S36). And the system controller 70 outputs the information such as the searched route up to the destination, the route navigation information and the car arrival required time in the form of voice from the speaker 66 and displays them on the display section 67.

Then, the system controller 70 performs the line connection process, on the basis of the terminal information of the portable telephone unit A (step S37), and establishes a communication line with the portable telephone unit A.

Then, the system controller 70 performs a transmission process of the calculated car location information and car arrival required time (step S38). Thereby, the car location information and car arrival required time are transmitted from the car navigation apparatus S through the mobile radio communications network NT to the portable telephone unit A (D3 in FIG. 7).

Then, the system controller 70 discriminates whether or not the car C arrives at the set destination (step S39). If it is discriminated that the car C arrives at the destination (step S39: Y), the procedure is ended. On the other hand, if it is discriminated that the car C does not arrive at the destination (step S39: N), the system controller 70 discriminates whether or not the car location request information is received (step S40). If it is discriminated that the car location request information is received (step S40: Y), the system controller 70 performs the processing at the steps S37, S38 and S39.

On the other hand, if it is not discriminated that the car location request information is received (step S40: N), the system controller 70 discriminates whether or not the terminal location information (after movement) and the terminal information of the portable telephone unit A are received (step S41). If it is discriminated that the terminal location information (after movement) and the terminal information are not received (step S41: N), the procedure returns to step S39.

On the other hand, if it is discriminated that the terminal location information (after movement) and the terminal information are received (step S41: Y), the system controller 70 resets the destination, on the basis of the terminal location information (after movement) of the portable telephone unit A (step S42).

Then, the system controller 70 performs the new route searching process up to the set destination, on the basis of the map information, the traffic information and the car location information, to produce the route navigation information and calculate the car arrival required time (step S43). And the system controller 70 outputs the information such as the searched route up to the destination, the route navigation information and the car arrival required time in the form of voice from the speaker 66 and displays them on the display section 67.

At step S38, the system controller 70 may transmit the device information of the car navigation apparatus S, together with the car location information and the car arrival required time (D3 in FIG. 7). With this constitution, the portable telephone unit A can designate the car navigation apparatus S on the basis of the transmitted device information, and acquire the device information at step S11 or S15 as shown in FIG. 7, without storing (registering) beforehand the device information of the car navigation apparatus S in the memory 20, thus performing the processing at step S13 or S17 as shown in FIG. 7. This constitution is effective in the case where there are a plurality of cars having the car navigation apparatus mounted and it is unknown which car comes to pick up the user.

In the above processing, the system controller 70 may transmit periodically the calculated car location information and car arrival required time to the portable telephone unit A. With this constitution, the user X of the portable telephone unit A can grasp the location and the arrival time of the car C successively, and thus can wait for the car with a sense of security even if the car C arrives behind.

As described above, with this embodiment of the invention, when communication between the portable telephone unit A and the portable telephone unit B is made, the terminal location information of the portable telephone unit A is transmitted to the portable telephone unit B, and the terminal location information is transferred from the portable telephone unit B to the car navigation apparatus S. In the car navigation apparatus S, a destination is set up, on the basis of the terminal location information, and the route up to the destination is searched for. Therefore, even when the user Y of the portable telephone unit B does not know the place where the user X of the portable telephone unit A is, it is possible to navigate the user Y quickly and correctly to the place of the user X, owing to a route navigation of the car navigation apparatus S of the car C.

When the location of the portable telephone unit A is moved after the terminal location information of the portable telephone unit A is transmitted to the portable telephone unit B, the terminal location information after movement is transmitted from the portable telephone unit A to the car navigation apparatus S, which then resets the destination, on the basis of the terminal location information, and searches for the new route up to the destination. Therefore, even when the location of the user X of the portable telephone unit A is moved, the user Y can be correctly navigated to the place after the movement.

Also, since the car location information and the car arrival time information are appropriately transmitted from the car navigation apparatus S to the portable telephone unit A, the user X can grasp where the car C is running now and how long it takes to arrive, and wait for the car with a sense of security.

In the above embodiment, the portable telephone unit A has the GPS receiving section 15 to detect the self-location information. However, apart from this, the location information of the portable telephone unit Amay be detected, using well-known location detecting methods, such as a three point measuring method using a base station, on the carrier side. With this constitution, for example, the communication control station of the carrier detects that the terminal location information transmission key 224 of the portable telephone unit A is pressed, or a code (number) is input by the numeric keys 221 of the operation section 22, whereby the location information of the portable telephone unit A is transmitted from the communication control station to the portable telephone unit B, or the location information of the portable telephone unit A is transmitted from the communication control station via the portable telephone unit A to the portable telephone unit B.

In the above embodiment, the portable telephone unit A of mobile type is applied as the first communication terminal unit of the invention, but the invention is not limited to such mobile type, and a fixed telephone unit such as a public telephone unit may be applied. In this case, if the user X inputs the code (number) from the numeric keys of the fixed telephone unit at steps S2 and S10 as shown in FIG. 7, the procedure goes to the next processing (step S5 or S11).

Also, in the above embodiment, the BT transmitting/receiving section 35 of the portable telephone unit B is the location information transfer device of the second communication terminal unit in the invention. Apart from this, the memory 40 (card type storage medium) of the portable telephone unit B may be location information transfer device. In this case, after the terminal location information and the terminal information of the portable telephone unit A are stored in the memory 40, the memory 40 is taken out, and put into the place for the memory 69 of the car navigation apparatus S, whereby the system controller 70 of the car navigation apparatus S acquires the terminal location information and the terminal information from the memory 40.

Moreover, the portable telephone unit B and the car navigation apparatus S may be connected via a special location information unit through the dedicated cable, and the location information unit may suck up automatically the terminal location information and the terminal information from the portable telephone unit B and transfer them to the car navigation apparatus S under the control of the system controller 41 of the portable telephone unit B. In this case, the system controller 41 and the location information unit for the portable telephone unit B are the location information transfer device of the second communication terminal unit in the invention.

Also, in the above embodiment, the Bluetooth is applied for the short distance radio communication function of the portable telephone unit B, but the invention is not limited to the Bluetooth. Besides, the invention may accord with the radio communication standards that can implement the through-put in broad band, such as 802.11b and IEEE802.11e or the like, and the radio communication standards with the diffusion radio communication (a communication rate of IGbps is expected within a few years) called the PulsON technology.

Also, in the above embodiment, it is supposed that the user X of the portable telephone unit A at a certain location (e.g., station) makes a phone call to the portable telephone unit B to ask the user Y of the portable telephone unit B at home to drive the car C to pick up the user X. However, the invention is not limited to this situation, but the user Y of the portable telephone unit B may be already in the car C, or at a certain shop. Also, besides driving the car C to pick up the user X, the user X of the portable telephone unit A may drive the car C to take a designated person to the place where the user Y of the portable telephone unit B is.

Also, in the above embodiment, the car navigation apparatus of the invention is the navigation apparatus mounted on the car, but the car navigation apparatus of the invention may be a so-called communication navigation apparatus. In this case, the car navigation apparatus is composed of a server device stationarily installed outside the car, and a terminal unit mounted on the car and communicating with the server device through the mobile radio communication network, in which the terminal location information of the portable telephone unit A transferred from the portable telephone unit B is received at the terminal unit, and transmitted through the mobile radio communication network to the server device. And the server device has a function as the route searching device of the invention to set up the destination on the basis of the terminal location information, and search for the route up to the destination.

The invention may be embodied in other specific forms. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A navigation system **characterised in that** the system (100) comprises:
a first communication terminal unit (A);
a second mobile communication terminal unit (B) which communicates with the first communication terminal unit (A); and
a car navigation apparatus (S);
wherein the first communication terminal unit (A) comprises a location information transmitting device (19, 21) for transmitting the self-location information to the second mobile communication terminal unit (B), and
the second mobile communication terminal unit (B) comprises:
a location information receiving device (31, 41) for receiving the location information transmitted from the first communication terminal unit (A); and
a location information transfer device (35, 41) for transferring the received location information to the car navigation apparatus (S), and
the car navigation apparatus (S) comprises a route searching device (70) for setting up a destination on the basis of the location information transferred from the second mobile communication terminal unit (B) and searching for the route up to the destination.

2. The navigation system (100) according to claim 1, wherein the first communication terminal unit (A) is a mobile communication terminal unit adapted to communicate with the car navigation apparatus (S), and the location information transmitting device (19, 21) of the first communication terminal unit (A) transmits the location information after movement to the car navigation apparatus (S), if the self-location changes after transmitting the self-location information to the second mobile communication terminal unit (B).

3. The navigation system (100) according to claim 2, wherein the car navigation apparatus (S) further comprises a location information receiving device (64, 70) for receiving the location information after movement transmitted from the first communication terminal unit (A).

4. The navigation system (100) according to claim 3, wherein the route searching device (70) of the car navigation apparatus (S) resets the destination on the basis of the location information after movement, and searches for the route up to the destination again, if receiving the location information after movement.

5. The navigation system (100) according to any one of claims 1 to 4, wherein the first communication terminal unit (A) is adapted to communicate with the car navigation apparatus (S), and further comprises a location information request device (19, 21) for requesting the location information of the car navigation apparatus (S) to the car navigation apparatus (S), and the car navigation apparatus (S) further comprises a location information transmitting device (65, 70) for transmitting the self-location information to the first communication terminal unit (A), if there is a request for the location information from the first communication terminal unit (A).

6. The navigation system (100) according to any one of claims 1 to 4, wherein the car navigation apparatus (S) is adapted to communicate with the first communication terminal unit (A) and further comprises a location information transmitting device (65, 70) for transmitting the self-location information to the first communication terminal unit (A).

7. The navigation system (100) according to any one of claims 1 to 4, wherein the car navigation apparatus (S) has a function of communicating with the first communication terminal unit (A) and further comprises a location information transmitting device (65, 70) for periodically transmitting the self-location information to the first communication terminal unit (A).

8. The navigation system (100) according to any one of claims 5 to 7, wherein the first communication terminal unit (A) further comprises a location information receiving device (11, 21)for receiving the location information transmitted from the car navigation apparatus (S), and a location information presenting device (14, 21)for presenting the received location information to the user of the first communication terminal unit (A).

9. The navigation system (100) according to any one of claims 1 to 8, wherein the location information transfer device (35, 41) of the second mobile communication terminal unit (B) has a short distance radio communication function to transfer the received location information to the car navigation apparatus (S) using the short distance radio communication function.

10. A second mobile communication terminal unit **characterised in that** the second mobile communication terminal unit (B) in a navigation system (100) comprising said unit (B), a first communication terminal unit (A) for transmitting the self-location information to said unit (B), and a car navigation apparatus (S), mounted on the car, for setting up a destination on the basis of the location information of the first communication terminal unit (A) transferred from said unit (B) and searching for the route up to the destination, comprises:
a location information receiving device (31, 41) for receiving the location information transmitted from the first communication terminal unit (A); and
a location information transfer device (35, 41) for transferring the received location information to the car navigation apparatus (S).

11. A route searching method for use in a navigation system (100) having a first communication terminal unit (A), a second mobile communication terminal unit (B) for communicating with the first communication terminal unit (A) and a car navigation apparatus (S), **characterised in that** the method comprises:
a step of transmitting the self-location information to the second mobile communication terminal unit (B) by the first communication terminal unit (A);
a step of receiving the location information transmitted from the first communication terminal unit (A) and to transfer it to the car navigation apparatus (S) by the second mobile communication terminal unit (B); and
a step of setting up a destination on the basis of the location information transferred from the second communication terminal unit (B) and searching for the route up to the destination by the car navigation apparatus (S).

12. The route searching method for use in the navigation system (100) according to claim 11, further comprising:
a step of transmitting the location information to the car navigation apparatus (S) by the first communication terminal unit (A), if the location of the first communication terminal unit (A) changes after the location information is transmitted from the first communication terminal unit (A) to the second mobile communication terminal unit (B);
a step of receiving the location information transmitted from the first communication terminal unit (A) by the car navigation apparatus (S); and
a step of resetting the destination on the basis of the received location information, and searching for the route up to the destination by the car navigation apparatus (S).

13. An information recorded medium wherein a program for a second mobile communication terminal unit (B) for use in a navigation system (100) according to claim 1, is recorded so as to be read by a computer, the program makes the computer function as:
a location information receiving device (31, 41) which receives a location information transmitted from a first communication terminal unit (A); and
a location information transfer device (35, 41) which transfers the received location information to a car navigation apparatus (S).

## Patentansprüche

1. Navigationssystem, **dadurch gekennzeichnet, dass** das System (100) die folgenden Teile umfasst:
eine erste Kommunikations-Anschlusseinheit (A);
eine zweite mobile Kommunikations-Anschlusseinheit (B), die mit der ersten Kommunikations-Anschlusseinheit (A) kommuniziert, und
ein Autonavigationsgerät (S);
wobei die erste Kommunikations-Anschlusseinheit (A) eine Ortsinformations-Sendeeinrichtung (19, 21) aufweist, um die Ortsinformation auf die zweite mobile Kommunikations-Anschlusseinheit (B) zu übertragen, und
die zweite mobile Kommunikations-Anschlusseinheit (B) folgende Teile umfasst:
eine Ortsinformations-Empfangseinrichtung (31, 41), um die Ortsinformation zu empfangen, die von der ersten Kommunikations-Anschlusseinheit (A) gesendet wurde, und
eine Ortsinformations-Übertragungseinrichtung (35, 41), um die empfangene Ortsinformation auf das Autonavigationsgerät (S) zu übertragen, und
wobei das Autonavigationsgerät (S) eine Fahrtrouten-Sucheinrichtung (70) aufweist, um ein Fahrziel auf der Basis der Ortsinformation einzustellen, die von der zweiten Kommunikations-Anschlusseinheit (B) übertragen wurde und um die Fahrtroute nach dem Fahrziel auszusuchen.

2. Navigationssystem (100) nach Anspruch 1, bei welchem die erste Kommunikations-Anschlusseinheit (A) eine mobile Kommunikations-Anschlusseinheit ist, die mit dem Autonavigationsgerät (S) kommuniziert und die Ortsinformations-Übertragungseinrichtung (19, 21) der ersten Kommunikations-Anschlusseinheit (A) die Ortsinformation nach der Bewegung dem Autonavigationsgerät (S) sendet, wenn der Ort sich ändert, nachdem die Ortsinformation auf die zweite mobile Kommunikations-Anschlusseinheit (B) übertragen wurde.

3. Navigationssystem (100) nach Anspruch 2, bei welchem das Autonavigationsgerät (S) außerdem eine Ortsinformations-Empfangseinrichtung (64, 70) aufweist, um die Ortsinformation zu empfangen, nachdem die Bewegung von der ersten Kommunikations-Anschlusseinheit (A) gesendet wurde.

4. Navigationssystem (100) nach Anspruch 3, bei welchem die Fahrtrouten-Sucheinrichtung (70) des Autonavigationsgerätes (S) das Fahrziel auf der Basis der Ortsinformation nach der Bewegung zurücksetzt und wiederum eine Fahrtroute nach dem Fahrziel sucht, wenn die Ortsinformation nach der Bewegung empfangen wurde.

5. Navigationssystem (100) nach einem der Ansprüche 1 bis 4, bei welchem die erste Kommunikations-Anschlusseinheit (A) mit dem Autonavigationsgerät (S) kommuniziert und außerdem eine Ortsinformations-Abfrageeinrichtung (19, 21) aufweist, um die Ortsinformation des Autonavigationsgerätes (S) an das Autonavigationsgerät (S) anzufordem und wobei das Autonavigationsgerät (S) außerdem eine Ortsinformations-Sendeeinrichtung (65, 70) aufweist, um die Ortsinformation an die erste Kommunikations-Anschlusseinheit (A) zu senden, wenn eine Abfrage für die Ortsinformation von der ersten Kommunikations-Anschlusseinheit (A) vorliegt.

6. Navigationssystem (100) nach einem der Ansprüche 1 bis 4, bei welchem das Autonavigationsgerät (S) mit der ersten Kommunikations-Anschlusseinheit (A) kommuniziert und weiter eine Ortsinformations-Sendeeinrichtung (65, 70) aufweist, um die Ortsinformation nach der ersten Kommunikations-Anschlusseinheit (A) zu senden.

7. Navigationssystem (100) nach einem der Ansprüche 1 bis 4, bei welchem das Autonavigationsgerät (S) eine Kommunikationsfunktion mit der ersten Kommunikations-Anschlusseinheit (A) besitzt und außerdem eine Ortsinformations-Sendeeinrichtung (65, 70) aufweist, um periodisch die Ortsinformation an die erste Kommunikations-Anschlusseinheit (A) zu senden.

8. Navigationssystem (100) nach einem der Ansprüche 5 bis 7, bei welchem die Kommunikations-Anschlusseinheit (A) weiter eine Ortsinformations-Empfangseinrichtung (11, 21) aufweist, um die Ortsinformation zu empfangen, die vom Autonavigationsgerät (S) gesendet wurde und wobei eine Ortsinformations-Präsentationseinrichtung (14, 21) vorgesehen ist, um die empfangene Ortsinformation dem Benutzer der ersten Kommunikations-Anschlusseinheit (A) zu präsentieren.

9. Navigationssystem (100) nach einem der Ansprüche 1 bis 8, bei welchem die Ortsinformations-Übertragungseinrichtung (35, 41) der zweiten mobilen Kommunikations-Anschlusseinheit (B) eine Kurzstrecken-Radio-Kommunikationsfunktion besitzt, um die empfangene Ortsinformation an das Autonavigationsgerät (S) unter Benutzung der Kurzstrecken-Radio-Kommunikationsfunktion zu übertragen.

10. Eine zweite mobile Kommunikations-Anschlusseinheit, **dadurch gekennzeichnet, dass** die zweite mobile Kommunikations-Anschlusseinheit (B) in einem Navigationssystem (100) die folgenden Teile umfasst: die Einheit (B), eine erste Kommunikations-Anschlusseinheit (A), um die Ortsinformation auf die Einheit (B) zu übertragen und ein Autonavigationsgerät (S), das im Auto montiert ist, um ein Fahrziel auf der Basis der Ortsinformation der ersten Kommunikations-Anschlusseinheit (A) einzustellen, die von der Einheit (B) übertragen wurde und wobei zum Aufsuchen der Fahrtroute nach dem Fahrziel die folgenden Einrichtungen vorhanden sind:
eine Ortsinformations-Empfangseinrichtung (31, 41) zum Empfang der Ortsinformation, die von der ersten Kommunikations-Anschlusseinheit (A) übertragen wurde, und
eine Ortsinformations-Übertragungseinrichtung (35, 41), um die empfangene Ortsinformation auf das Autonavigationsgerät (S) zu übertragen.

11. Fahrtrouten-Suchverfahren zur Benutzung in einem Navigationssystem (100), das eine erste Kommunikations-Anschlusseinheit (A), eine zweite mobile Kommunikations-Anschlusseinheit (B) zur Kommunikation mit der ersten Kommunikations-Anschlusseinheit (A) und ein Autonavigationsgerät (S) aufweist, **dadurch gekennzeichnet, dass** das Verfahren die folgenden Schritte umfasst:
es wird die Ortsinformation auf die zweite mobile Kommunikations-Anschlusseinheit (B) durch die erste Kommunikations-Anschlusseinheit (A) übertragen;
es wird die Ortsinformation empfangen, die von der ersten Kommunikations-Anschlusseinheit (A) übertragen wurde und es wird diese Information auf das Autonavigationsgerät (S) durch die zweite mobile Kommunikations-Anschlusseinheit (B) übertragen, und
es wird ein Fahrziel auf der Basis der Ortsinformation eingestellt, die von der zweiten Kommunikations-Anschlusseinheit (B) übertragen wurde und es wird die Fahrtroute nach dem Fahrziel durch das Autonavigationsgerät (S) ermittelt.

12. Fahrtrouten-Suchverfahren zur Benutzung in einem Navigationssystem (100) nach Anspruch 11, welches weiter die folgenden Schritte umfasst:
es wird die Ortsinformation auf das Autonavigationsgerät (S) durch die erste Kommunikations-Anschlusseinheit (A) übertragen, wenn der Ort der ersten Kommunikations-Anschlusseinheit (A) sich ändert, nachdem die Ortsinformation von der ersten Kommunikations-Anschlusseinheit (A) auf die zweite Kommunikations-Anschlusseinheit (B) übertragen wurde;
es wird die Ortsinformation empfangen, die von der ersten Kommunikations-Anschlusseinheit (A) durch das Autonavigationsgerät (S) übertragen wurde, und
es wird das Fahrziel auf der Basis der empfangenen Ortsinformation wieder eingestellt und es wird die Fahrtroute nach dem Fahrziel durch das Autonavigationsgerät (S) aufgesucht.

13. Informationsaufzeichnungsmedium, bei welchem ein Programm für eine zweite mobile Kommunikations-Anschlusseinheit (B) zur Benutzung in einem Navigationssystem (100) nach Anspruch 1 derart aufgezeichnet wird, dass es Computer-lesbar wird, wobei das Programm die Computerfunktion wie folgt durchführt:
eine Ortsinformations-Empfangseinrichtung (31, 41) empfängt eine Ortsinformation, die von einer ersten Kommunikations-Anschlusseinheit (A) übertragen wurde, und
eine Ortsinformations-Übertragungseinrichtung (35, 41) überträgt die empfangene Ortsinformation auf das Autonavigationsgerät (S).

## Revendications

1. Système de navigation **caractérisé en ce que** le système (100) comprend :
une première unité de terminal de réseau (A) ;
une deuxième unité de terminal de réseau mobile (B) qui entre en communication avec la première unité de terminal de réseau (A) ; et
un appareil de navigation pour véhicule (S) ;
la première unité de terminal de réseau (A) comprenant un dispositif de transmission d'informations de positionnement (19, 21) pour transmettre les informations d'autopositionnement à la deuxième unité de terminal de réseau mobile (B) ; et
la deuxième unité de terminal de réseau mobile (B) comprenant :
un dispositif de réception d'informations de positionnement (31, 41) pour recevoir les informations de positionnement transmises par la première unité de terminal de réseau (A) ; et
un dispositif de transfert d'informations de positionnement (35, 41) pour transférer les informations de positionnement reçues à l'appareil de navigation pour véhicule (S) ; et
l'appareil de navigation pour véhicule (S) comprenant un dispositif de recherche d'itinéraire (70) pour établir une destination sur base des informations de positionnement transférées à partir de la deuxième unité de terminal de réseau mobile (B) et pour rechercher l'itinéraire menant à la destination.

2. Système de navigation (100) selon la revendication 1, dans lequel la première unité de terminal de réseau (A) est une unité de terminal de réseau mobile conçue pour entrer en communication avec l'appareil de navigation pour véhicule (S), et le dispositif de transmission d'informations de positionnement (19, 21) de la première unité de terminal de réseau (A) transmet les informations de positionnement, après une mise en mouvement, à l'appareil de navigation pour véhicule (S), lorsque l'autopositionnement le demande après la transmission des informations d'autopositionnement à la deuxième unité de terminal de réseau mobile (B).

3. Système de navigation (100) selon la revendication 2, dans lequel l'appareil de navigation pour véhicule (S) comprend en outre un dispositif de réception d'informations de positionnement (64, 70) pour la réception des informations de positionnement, après une mise en mouvement, transmises par la première unité de terminal de réseau (A).

4. Système de navigation (100) selon la revendication 3, dans lequel le dispositif de recherche d'itinéraire (70) de l'appareil de navigation pour véhicule (S) remet la destination à zéro sur base des informations de positionnement, après une mise en mouvement, et recherche à nouveau l'itinéraire menant à la destination, lors d'une réception d'informations de positionnement après la mise en mouvement.

5. Système de navigation (100) selon l'une quelconque des revendications 1 à 4, dans lequel la première unité de terminal de réseau (A) est conçue pour entrer en communication avec l'appareil de navigation pour véhicule (S) et comprend en outre un dispositif de demande d'informations de positionnement (19, 21) pour demander les informations de positionnement de l'appareil de navigation pour véhicule (S) à l'appareil de navigation pour véhicule (S), l'appareil de navigation pour véhicule (S) comprenant en outre un dispositif de transmission d'informations de positionnement (65, 70) pour la transmission des informations d'autopositionnement à la première unité de terminal de réseau (A), dans le cas d'une demande d'informations de positionnement émise par la première unité de terminal de réseau (A).

6. Système de navigation (100) selon l'une quelconque des revendications 1 à 4, dans lequel l'appareil de navigation pour véhicule (S) est conçu pour entrer en communication avec la première unité de terminal de réseau (A) et comprend en outre un dispositif de transmission d'informations de positionnement (65, 70) pour transmettre les informations d'auto-positionnement à la première unité de terminal de réseau (A).

7. Système de navigation (100) selon l'une quelconque des revendications 1 à 4, dans lequel l'appareil de navigation pour véhicule (S) possède une fonction lui permettant d'entrer en communication avec la première unité de terminal de réseau (A) et comprend en outre un dispositif de transmission d'informations de positionnement (65, 70) pour transmettre de manière périodique les informations d'auto-positionnement à la première unité de terminal de réseau (A).

8. Système de navigation (100) selon l'une quelconque des revendications 5 à 7, dans lequel la première unité de terminal de réseau (A) comprend en outre un dispositif de réception d'informations de positionnement (11, 21) pour la réception des informations de positionnement transmises par l'appareil de navigation pour véhicule (S), et un dispositif de présentation d'informations de positionnement (14, 21) pour présenter les informations de positionnement reçues à l'utilisateur de la première unité de terminal de réseau (A).

9. Système de navigation (100) selon l'une quelconque des revendications 1 à 8, dans lequel le dispositif de transfert d'informations de positionnement (35, 41) de la deuxième unité de terminal de réseau mobile (B) possède une fonction de communication radio à courte distance pour transférer les informations de positionnement reçues à l'appareil de navigation pour véhicule (S) en utilisant la fonction de communication radio à courte distance.

10. Deuxième unité de terminal de réseau mobile **caractérisée en ce que** la deuxième unité de terminal de réseau mobile (B) dans un système de navigation (100) comprenant ladite unité (B), une première unité de terminal de réseau (A) pour la transmission des informations d'autopositionnement à ladite unité (B), et un appareil de navigation pour véhicule (S), monté sur le véhicule, pour établir une destination sur base des informations de positionnement de la première unité de terminal de réseau (A) transférées à partir de ladite unité (B) et pour rechercher l'itinéraire menant à la destination, comprend :
un dispositif de réception d'informations de positionnement (31, 41) pour la réception des informations de positionnement transmises par la première unité de terminal de réseau (A) ; et
un dispositif de transfert d'informations de positionnement (35, 41) pour transférer les informations de positionnement reçues à l'appareil de navigation pour véhicule (S).

11. Procédé de recherche d'itinéraire à utiliser dans un système de navigation (100) possédant une première unité de terminal de réseau (A), une deuxième unité de terminal de réseau mobile (B) pour entrer en communication avec la première unité de terminal de réseau (A) et un appareil de navigation pour véhicule (S), **caractérisé en ce que** le procédé comprend :
une étape consistant à transmettre les informations d'autopositionnement à la deuxième unité de terminal de réseau mobile (B) via la première unité de terminal de réseau (A) ;
une étape consistant à recevoir les informations de positionnement transmises par la première unité de terminal de réseau (A) et à les transférer à l'appareil de navigation pour véhicule (S) via la deuxième unité de terminal de réseau mobile (B) ; et
une étape consistant à établir une destination sur base des informations de positionnement transférées à partir de la deuxième unité de terminal de réseau (B) et à rechercher un itinéraire menant à la destination, via l'appareil de navigation pour véhicule (S).

12. Procédé de recherche d'itinéraire à utiliser dans le système de navigation (100) selon la revendication 11, comprenant en outre :
une étape consistant à transmettre les informations de positionnement à l'appareil de navigation pour véhicule (S) via la première unité de terminal de réseau (A) lorsque le positionnement de la première unité de terminal de réseau (A) le demande après la transmission des informations de positionnement via la première unité de terminal de réseau (A) à la deuxième unité de terminal de réseau mobile (B) ;
une étape consistant à recevoir les informations de positionnement transmises à partir de la première unité de terminal de réseau (A) par l'appareil de navigation pour véhicule (S) ; et
une étape consistant à remettre à zéro la destination sur base des informations de positionnement reçues et à rechercher l'itinéraire menant à la destination via l'appareil de navigation pour véhicule (S).

13. Support d'enregistrement d'informations, dans lequel un programme pour une deuxième unité de terminal de réseau mobile (B) à utiliser dans un système de navigation (100) selon la revendication 1, est enregistré de façon à pouvoir être lu par un ordinateur, le programme permettant à l'ordinateur de faire office :
de dispositif de réception d'informations de positionnement (31, 41) qui reçoit des informations de positionnement transmises par une première unité de terminal de réseau (A) ; et
de dispositif de transfert d'informations de positionnement (35, 41) qui transfère les informations de positionnement reçues à un appareil de navigation pour véhicule (S).
